# EUROPEAN PATENT APPLICATION

(11) **EP 4 170 785 A1**
(43) Date of publication of application: **26.04.2023**
(21) Application number: 21893111.1
(22) Date of filing: 30.08.2021
(51) Int. Cl.: H01M 50/186, H01M 50/209

(54) **BATTERY, ELECTRIC DEVICE, AND BATTERY PREPARATION METHOD AND DEVICE**

(71) Applicant: Contemporary Amperex Technology Co., Limited, Jiaocheng District Ningde City, Fujian 352100 (CN)
(72) Inventor: KE, Jianhuang, Ningde Fujian 352100 (CN); CHEN, Xiaobo, Ningde Fujian 352100 (CN); LI, Yao, Ningde Fujian 352100 (CN); PU, Yujie, Ningde Fujian 352100 (CN); JIN, Qiu, Ningde Fujian 352100 (CN)
(74) Representative: Herrero & Asociados, S.L.
(86) International application number: PCT/CN2021/115300
(87) International publication number: WO 2023/028748

(57) **Abstract**

Embodiments of the present application provide a battery, a power consumption apparatus, and a method and apparatus for producing a battery. The battery (100) includes: a battery cell (20), provided with a pressure relief mechanism (213), the pressure relief mechanism (213) being configured to be actuated when an internal pressure or temperature of the battery cell (20) reaches a threshold, to relieve the internal pressure; a bus component (12), configured to be electrically connected to the battery cell (20); an electrical cavity (11a), configured to accommodate the battery cell (20) and the bus component (12); a collecting cavity (11b), configured to collect emissions from the battery cell (20) when the pressure relief mechanism (213) is actuated; and a sealing structure (215), disposed in an airflow path formed between the pressure relief mechanism (213) and a wall of the electrical cavity (1 1a) and configured to prevent the emissions from reaching the bus component (12) when the pressure relief mechanism (213) is actuated. The battery, the power consumption apparatus, and the method and apparatus for producing the battery according to the embodiments of the present application can enhance safety of the battery.

## Description

### TECHNICAL FIELD

The present application relates to the field of battery technologies, and in particular, to a battery, a power consumption apparatus, and a method and apparatus for producing a battery.

### BACKGROUND

Energy conservation and emission reduction are the key to the sustainable development of the automotive industry. In this case, electric vehicles have become an important part of the sustainable development of the automotive industry due to their advantages of energy conservation and environmental protection. For the electric vehicles, the battery technology is an important factor for their development.

In the development of the battery technology, in addition to improving performance of batteries, safety is also an issue that cannot be ignored. If the safety of the batteries cannot be ensured, the batteries cannot be used. Therefore, how to enhance the safety of a battery is an urgent technical problem to be solved in the battery technology.

### SUMMARY

The present application provides a battery, a power consumption apparatus, and a method and apparatus for producing a battery, which could enhance safety of the battery.

In a first aspect, a battery is provided, including: a battery cell, provided with a pressure relief mechanism, the pressure relief mechanism being configured to be actuated when an internal pressure or temperature of the battery cell reaches a threshold, to relieve the internal pressure; a bus component, configured to be electrically connected to the battery cell; an electrical cavity, configured to accommodate the battery cell and the bus component; a collecting cavity, configured to collect emissions from the battery cell when the pressure relief mechanism is actuated; and a sealing structure, disposed in an airflow path formed between the pressure relief mechanism and a wall of the electrical cavity and configured to prevent the emissions from reaching the bus component when the pressure relief mechanism is actuated.

A sealing structure is disposed in an airflow path formed between a pressure relief mechanism and a wall of an electrical cavity, and in this way, when the pressure relief mechanism is actuated, emissions from a battery cell can be blocked from entering the electrical cavity, thereby reducing a risk of insulation protection failure and the possibility of occurrence of high-voltage ignition, and thus safety of a battery is improved. In addition, the presence of this sealing structure may prevent high-temperature particles from accumulating in a high-risk region, which reduces the possibility of occurrence of a failure mode caused by a local temperature rise.

In a possible implementation manner, the sealing structure is disposed at least around an outer periphery of the pressure relief mechanism, to prevent the emissions from reaching the bus component when the pressure relief mechanism is actuated.

In a possible implementation manner, the battery further includes: an isolating component configured to isolate the electrical cavity from the collecting cavity, the isolating component being structured as a wall shared by the electrical cavity and the collecting cavity.

The electrical cavity for accommodating the battery cell is separated from the collecting cavity for collecting the emissions by using an isolating component. When the pressure relief mechanism is actuated, the emissions from the battery cell enter the collecting cavity, do not enter the electrical cavity, or a small amount of the emissions enter the electrical cavity, thereby preventing a short circuit caused by the insulation protection failure in the electrical cavity, and therefore the safety of the battery can be enhanced. Meanwhile, the emissions generated after the battery cell experiences runaway are discharged to the collecting cavity, and to the outside of the battery via the pressure relief region. A discharging path of the emissions is extended, which can effectively reduce a temperature of the emissions, and reduce the influence of the emissions on an external environment of the battery, and thus the safety of the battery is further enhanced.

In a possible implementation manner, the pressure relief mechanism is disposed on a first wall of the battery cell, the sealing structure includes a first sealing component disposed between the first wall and the isolating component, the first sealing component has a through hole at a position corresponding to the pressure relief mechanism, and when the pressure relief mechanism is actuated, the emissions pass through the isolating component via the through hole and enter the collecting cavity.

A periphery of the pressure relief mechanism is provided with a first sealing component, and the first sealing component has a through hole at a position corresponding to the pressure relief mechanism, so that when the pressure relief mechanism is actuated, the emissions cannot diffuse laterally into the electrical cavity, but can only diffuse longitudinally into the collecting cavity, and thus the emissions may be isolated from the bus component and the safety performance of the battery is enhanced.

In a possible implementation manner, the first sealing component is of a frame-shaped structure with one through hole, a plurality of battery cells are provided, and one through hole corresponds to pressure relief mechanisms of the plurality of battery cells.

A frame-shaped structure with one through hole is adopted as a sealing structure, and the processing difficulty is low.

In a possible implementation manner, the first sealing component is of a grid structure with a plurality of through holes, a plurality of battery cells are provided, and the plurality of through holes are in one-to-one correspondence with pressure relief mechanisms of the plurality of the battery cells.

A grid structure with a plurality of through holes is adopted as a sealing structure, and a sealing effect can be improved.

In a possible implementation manner, the battery further includes: a partition beam configured to partition the electrical cavity into a plurality of accommodating cavities; the sealing structure further includes a second sealing component disposed between a side wall of an accommodating cavity and a second wall of the battery cell, and the second wall is disposed to intersect with the first wall.

A second sealing component is disposed between a side wall of the accommodating cavity and a second wall of the battery cell, so that when the pressure relief mechanism is actuated, the emissions cannot diffuse longitudinally into the electrical cavity but can only diffuse longitudinally into the collecting cavity, and thus the emissions may be isolated from the bus component and the safety of the battery cell is enhanced.

In a possible implementation manner, the first sealing component is a sealing gasket or a sealant and/or the second sealing component is a sealing gasket or a sealant.

A common sealant or sealing gasket is adopted as a sealing structure, and it is easy to implement.

In a possible implementation manner, the side wall of the accommodating cavity is provided with a sealant injecting hole configured to inject the sealant.

Since the sealant has a certain fluidity during use and is gradually solidified after a period of time, the sealant may be arranged more conveniently by injecting the sealant through a sealant injecting hole.

In a possible implementation manner, the first sealing component and the second sealing component are integrally formed.

An integrally formed sealing structure is adopted, which has a more excellent sealing effect.

In a possible implementation manner, a surface of the sealing gasket is coated or sprayed with a material having a melting point greater than a temperature of the emissions.

In a possible implementation manner, a melting point of the sealing structure is greater than a temperature of the emissions.

A surface of the sealing gasket is coated or sprayed with a material having a melting point greater than a temperature of the emissions on, or a sealing structure with a melting point greater than a temperature of the emissions is adopted, which can achieve requirements of temperature resistance and stamping resistance.

In a second aspect, a power consumption apparatus is provided, including: the battery of the first aspect, the battery being configured to provide electric energy.

In a third aspect, a method for producing a battery is provided, including: providing a battery cell, the battery cell being provided with a pressure relief mechanism, the pressure relief mechanism being configured to be actuated when an internal pressure or temperature of the battery cell reaches a threshold, to relieve the internal pressure; providing a bus component configured to be electrically connected to the battery cell; providing an electrical cavity configured to accommodate the battery cell and the bus component; providing a collecting cavity configured to collect emissions from the battery cell when the pressure relief mechanism is actuated; and providing a sealing structure disposed in an airflow path formed between the pressure relief mechanism and a wall of the electrical cavity and configured to prevent the emissions from reaching the bus component when the pressure relief mechanism is actuated.

In a fourth aspect, an apparatus for producing a battery is provided, including: a providing module configured to: provide a battery cell, the battery cell being provided with a pressure relief mechanism, the pressure relief mechanism being configured to be actuated when an internal pressure or temperature of the battery cell reaches a threshold, to relieve the internal pressure; provide a bus component configured to be electrically connected to the battery cell; provide an electrical cavity configured to accommodate the battery cell and the bus component; provide a collecting cavity configured to collect emissions from the battery cell when the pressure relief mechanism is actuated; and provide a sealing structure disposed in an airflow path formed between the pressure relief mechanism and a wall of the electrical cavity and configured to prevent the emissions from reaching the bus component when the pressure relief mechanism is actuated.

### BRIEF DESCRIPTION OF THE DRAWINGS

To describe technical solutions in embodiments of the present application more clearly, the following briefly introduces accompanying drawings required for describing the embodiments of the present application. Apparently, the accompanying drawings in the following description are only some embodiments of the present application, and a person of ordinary skill in the art may still derive other drawings from the accompanying drawings without creative efforts.
FIG. 1 is a schematic structural diagram of a vehicle disclosed in an embodiment of present application.
FIG. 2 is a schematic structural diagram of a battery disclosed in an embodiment of the present application.
FIG. 3 is a schematic structural diagram of a battery cell disclosed in an embodiment of the present application.
FIG. 4 is a schematic structural diagram of a battery disclosed in an embodiment of the present application.
FIG. 5a is a schematic plan diagram of a battery disclosed in an embodiment of the present application.
FIG. 5b is a schematic cross-sectional view of a battery disclosed in an embodiment of the present application.
FIG. 5c is a schematic enlarged view of B of the battery disclosed in an embodiment of the present application.
FIG. 6a is a schematic structural diagram of a first sealing component disclosed in an embodiment of the present application.
FIG. 6b is a schematic structural diagram of a first sealing component disclosed in another embodiment of the present application.
FIG. 6c is a schematic exploded view of a battery including the first sealing component of FIG. 6a provided by an embodiment of the present application.
FIG. 6d is a schematic exploded view of a battery including the first sealing component of FIG. 6b provided by an embodiment of the present application.
FIG. 7a is a schematic cross-sectional view of a battery disclosed in another embodiment of the present application.
FIG. 7b is a schematic enlarged view of C of the battery disclosed in an embodiment of the present application.
FIG. 7c is a schematic structural diagram of a second sealing component disclosed in an embodiment of the present application.
FIG. 7d is a schematic exploded view of a battery including the second sealing component of FIG. 7c provided by an embodiment of the present application.
FIG. 8a is a schematic cross-sectional view of a battery disclosed in yet another embodiment of the present application.
FIG. 8b is a schematic enlarged view of D of the battery disclosed in an embodiment of the present application.
FIG. 8c is a schematic enlarged view of E of the battery disclosed in an embodiment of the present application.
FIG. 8d is a schematic structural diagram of a sealing structure with a bottom portion completely wrapped disclosed in an embodiment of the present application.
FIG. 8e is a schematic exploded view of a battery including the sealing structure of FIG. 8d provided by an embodiment of the present application.
FIG. 9 is a schematic block diagram of a method for producing a battery according to an embodiment of the present application.
FIG. 10 is a schematic block diagram of an apparatus for producing a battery according to an embodiment of the present application.
In the accompanying drawings, the accompanying drawings are not drawn to actual scale.

### DESCRIPTION OF EMBODIMENTS

To make the objectives, technical solutions and advantages of the embodiments of the present application clearer, the following clearly describes the technical solutions in the embodiments of the present application with reference to the accompanying drawings in the embodiments of the present application. Apparently, the described embodiments are merely some but not all of the embodiments of the present application. All the other embodiments obtained by a person of ordinary skill in the art based on the embodiments of the present application without any inventive effort shall fall within the scope of protection of the present application.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "comprising" and "having" and any variations thereof in the specification and the claims of the present application as well as the foregoing description of the accompanying drawings are intended to cover non-exclusive inclusions. The terms "first", "second" and the like in the specification and the claims of the present application as well as the above drawings are used to distinguish different objects, rather than to describe a specific order or primary-secondary relationship.

The terms representing directions in the following description are all directions shown in the drawings, and do not limit the specific structure of the present application. In the description of the present application, it should be further noted that, unless explicitly specified and defined otherwise, terms "installation", "interconnection", and "connection" should be understood in a broad sense, for example, they may be a fixed connection, a detachable connection, or an integrated connection; may be a direct connection and may also be an indirect connection via an intermediate medium. A person of ordinary skill in the art may understand the specific meanings of the foregoing terms in the present application according to specific conditions.

The phrase "embodiments" referred to in the present application means that the descriptions of specific features, structures, and characteristics in combination with the embodiments are included in at least one embodiment of the present application. The phrase at various locations in the specification does not necessarily refer to the same embodiment, or an independent or alternative embodiment exclusive of another embodiment. Those skilled in the art understand, in explicit and implicit manners, that an embodiment described in the present application may be combined with another embodiment.

In the description of the present application, it should be noted that, unless explicitly specified and defined otherwise, terms "installation", "interconnection", "connection", and "attachment" should be understood in a broad sense, for example, they may be a fixed connection, a detachable connection, or an integrated connection; may be a direct connection and may also be an indirect connection via an intermediate medium, or may be communication between the interiors of two elements. A person of ordinary skill in the art may understand the specific meanings of the foregoing terms in the present application according to specific conditions.

In the present application, the term "and/or" is only an association relation describing associated objects, which means that there may be three relations, for example, A and/or B may represent three situations: A exists alone, both A and B exist, and B exists alone. In addition, the character "/" in the present application generally indicates that the associated objects before and after the character are in an "or" relationship.

In the present application, "a plurality of" means two or more (including two), similarly, "a plurality of groups" means two or more groups (including two groups), and "a plurality of sheets" means two or more sheets (including two sheets).

In the present application, a battery cell may include a lithium-ion secondary battery, a lithium-ion primary battery, a lithium-sulfur battery, a sodium/lithium-ion battery, a sodium-ion battery, a magnesium-ion battery, or the like, which is not limited in the embodiments of the present application. The battery cell may be cylindrical, flat, cuboid or in another shape, which is not limited in the embodiments of the present application. A battery cell is generally divided into three types according to the way of packaging: a cylindrical battery cell, a prismatic battery cell and a pouch battery cell, which is also not limited in the embodiments of the present application.

The battery mentioned in the embodiments of the present application refers to a single physical module including one or more battery cells to provide a higher voltage and capacity. For example, the battery mentioned in the present application may include a battery module, a battery pack or the like. The battery generally includes a box for packaging one or more battery cells. The box can avoid a liquid or other foreign matters to affect charging or discharging of the battery cell.

The battery cell includes an electrode assembly and an electrolytic solution, and the electrode assembly is composed of a positive electrode sheet, a negative electrode sheet and a separator. The operation of the battery cell mainly relies on movement of metal ions between the positive electrode sheet and the negative electrode sheet. The positive electrode sheet includes a positive electrode current collector and a positive electrode active material layer. The positive electrode active material layer is coated on a surface of the positive electrode current collector, the current collector not coated with the positive electrode active material layer protrudes from the current collector coated with the positive electrode active material layer, and the current collector not coated with the positive electrode active material layer is used as a positive electrode tab. In an example of a lithium-ion battery, the material of the positive electrode current collector may be aluminum, and the positive electrode active material may be lithium cobalt oxides, lithium iron phosphate, ternary lithium, lithium manganate, or the like. The negative electrode sheet includes a negative electrode current collector and a negative electrode active material layer. The negative electrode active material layer is coated on a surface of the negative electrode current collector, the current collector not coated with the negative electrode active material layer protrudes from the current collector coated with the negative electrode active material layer, and the current collector not coated with the negative electrode active material layer is used as a negative electrode tab. The material of the negative electrode current collector may be copper, and the negative electrode active material may be carbon, silicon, or the like. In order to ensure that no fusing occurs when a large current passes, there are a plurality of positive electrode tabs which are stacked together, and there are a plurality of negative electrode tabs which are stacked together. A material of the separator may be PP, PE, or the like. In addition, the electrode assembly may be a winding structure or a laminated structure, and the embodiments of the present application are not limited thereto. With the development of the battery technology, it is necessary to consider design factors in multiple aspects simultaneously, such as energy density, cycle life, discharge capacity, C-rate and other performance parameters. In addition, safety of the battery should also be considered.

For a battery cell, a main safety hazard comes from charging and discharging processes, and a suitable environmental temperature design is also required. In order to effectively avoid unnecessary losses, at least triple protection measures are generally taken for the battery cell. Specifically, the protection measures include at least a switch element, a material selected properly for a separator and a pressure relief mechanism. The switch element refers to an element that can stop charging or discharging of a battery when a temperature or resistance in a battery cell reaches a certain threshold. The separator is configured to separate a positive electrode sheet from a negative electrode sheet, and micron-sized (or even nanoscale) micropores attached thereto may be automatically melted when the temperature rises to a certain value, so that metal ions cannot pass on the separator and the internal reaction of the battery cell is terminated.

The pressure relief mechanism refers to an element or component that is actuated when an internal pressure or temperature of the battery cell reaches a predetermined threshold, to relieve the internal pressure or temperature. The threshold design is different according to different design demands. The threshold may depend on a material of one or more of a positive electrode sheet, a negative electrode sheet, an electrolytic solution and a separator in the battery cell. The pressure relief mechanism may take the form of an anti-explosion valve, an air valve, a pressure relief valve, a safety valve, or the like, and may specifically adopt a pressure-sensitive or temperature-sensitive element or structure. That is, when the internal pressure or temperature of the battery cell reaches a predetermined threshold, the pressure relief mechanism performs an action or a weakened structure provided in the pressure relief mechanism is damaged, so as to form an opening or a channel for relieving the internal pressure or temperature.

The "actuation" mentioned in the present application means that the pressure relief mechanism acts or is activated to a certain state, so that the internal pressure and temperature of the battery cell can be relieved. The action generated by the pressure relief mechanism may include but is not limited to: at least a portion of the pressure relief mechanism being fractured, broken, torn or opened, and so on. When the pressure relief mechanism is actuated, high-temperature and high-pressure substances in the interior of the battery cell are discharged outward from an actuated position as emissions. In this way, the pressure of the battery cell can be relieved at a controllable pressure or temperature, thereby avoiding potentially more serious accidents.

The emissions from the battery cell mentioned in the present application include but are not limited to: an electrolytic solution, dissolved or split positive and negative electrode sheets, fragments of a separator, high-temperature and high-pressure gas generated by reaction, flame, or the like.

The pressure relief mechanism on the battery cell has an important impact on the safety of the battery. For example, when short circuit, overcharge and other phenomena occur, it may lead to thermal runaway in the interior of the battery cell, resulting in a sudden increase in pressure or temperature. In this case, the internal pressure and temperature can be released outward through the actuation of the pressure relief mechanism, to prevent the battery cell from exploding and catching fire.

In the current design solution of the pressure relief mechanism, the main concern is to release the high pressure and high heat in the interior of the battery cell, that is, to discharge the emissions to the outside of the battery cell. However, in order to ensure an output voltage or current of the battery, a plurality of battery cells are often required and electrically connected to each other via a bus component. The emissions discharged from the interior of a battery cell may cause a short circuit of the other battery cells. For example, when discharged metal scraps are electrically connected to two bus components, the battery is short-circuited, thereby posing a potential safety hazard. Moreover, the high-temperature and high-pressure emissions are discharged in a direction in which the pressure relief mechanism of the battery cell is provided, and more specifically, may be discharged in a direction of a region where the pressure relief mechanism is actuated. The strength and destructive power of such emissions may be great, or may even be enough to break through one or more structures in this direction, causing further safety problems.

In view of this, an embodiment of the present application is provided with a technical solution, the electrical cavity for accommodating the battery cell is separated from the collecting cavity for collecting the emissions by using an isolating component. When the pressure relief mechanism is actuated, the emissions from the battery cell enter the collecting cavity, do not enter the electrical cavity, or a small amount of the emissions enter the electrical cavity, thereby preventing a short circuit caused by the insulation protection failure in the electrical cavity, and therefore the safety of the battery can be enhanced. Meanwhile, the emissions generated after the battery cell experiences runaway are discharged to the collecting cavity, and to the outside of the battery via the pressure relief region. A discharging path of the emissions is extended, which can effectively reduce a temperature of the emissions, and reduce the influence of the emissions on an external environment of the battery, and thus the safety of the battery is further enhanced.

The so-called "isolation" here refers to separation, which may not necessarily be sealed. Generally, in addition to separating the electrical cavity from the collecting cavity, the isolating component is also configured to accommodate a fluid to adjust a temperature of the plurality of battery cells, that is, the isolating component may also be referred to as a thermal management component. The fluid accommodated in the thermal management component may be a liquid or a gas, and the temperature adjustment means heating or cooling the plurality of battery cells. In a case of cooling or lowering the temperature of the battery cells, the thermal management component is configured to accommodate a cooling fluid to lower the temperature of the plurality of battery cells. In this case, the thermal management component may also be called a cooling component, a cooling system, a cooling plate, or the like. The fluid accommodated in it may also be called a cooling medium or a cooling fluid, and more specifically, may be called a cooling liquid or a cooling gas. In addition, the thermal management component may also be configured for heating to raise the temperature of the plurality of battery cells, which is not limited in the embodiment of the present application. Optionally, the fluid may flow in a circulating manner to achieve a better temperature adjustment effect. Optionally, the fluid may be water, a mixture of water and ethylene glycol, air, or the like.

The electrical cavity mentioned in the present application may be configured to accommodate the plurality of battery cells and a bus component. The electrical cavity may be sealed or unsealed. The electrical cavity provides an installing space for the battery cells and the bus component. In some embodiments, a structure configured to fix the battery cells may also be disposed in the electrical cavity. The shape of the electrical cavity may be determined according to the number and shape of the battery cells and the bus component which are accommodated therein. In some embodiments, the electrical cavity may be a cube with six walls. Since the battery cells in the electrical cavity are electrically connected to form a higher voltage output, the electrical cavity may also be called a "high-voltage cavity".

The bus component mentioned in the present application is configured to implement the electrical connection between the plurality of battery cells, such as parallel connection, series connection or parallel-series connection. The bus component may implement the electrical connection between the battery cells by connecting electrode terminals of the battery cells. In some embodiments, the bus component may be fixed to the electrode terminals of the battery cells by means of welding. Corresponding to the "high-voltage cavity", the electrical connection formed by the bus component may also be called "high-voltage connection".

The collecting cavity mentioned in the present application is configured to collect the emissions and may be sealed or unsealed. In some embodiments, the collecting cavity may contain air or other gases. Optionally, the collecting cavity may also contain a liquid, such as a cooling medium, or a component for accommodating the liquid is provided to further lower the temperature of the emissions entering the collecting cavity. Further, optionally, the gas or liquid in the collecting cavity flows in a circulating manner. In the collecting cavity, there is no electrical connection to the voltage output. Corresponding to the "high-voltage cavity", the collecting cavity may also be called a "low-voltage cavity".

Although the electrical cavity and the collecting cavity may be separated by the isolating component so that the emissions from the battery cell enter the collecting cavity when the pressure relief mechanism is actuated, in practical applications, a small amount of emissions may enter the electrical cavity so that a short circuit occurs due to the insulation protection failure in the electrical cavity, and thus safety performance of the battery is reduced.

In view of this, based on the foregoing embodiments, an embodiment of the present application further adds a sealing structure disposed in an airflow path formed between the pressure relief mechanism and a wall of the electrical cavity, and configured to prevent the emissions from the battery cell from reaching the bus component when the pressure relief mechanism is actuated, in other words, the emissions are further separated from the high-voltage connection, reducing a risk of insulation protection failure and the possibility of occurrence of high-voltage ignition, and thus safety of the battery is improved. In addition, the sealing structure can prevent high-temperature particles from accumulating in a high-risk region, which reduces the possibility of occurrence of a failure mode caused by a local temperature rise.

The technical solutions described in the embodiments of the present application are all applicable to various apparatuses using batteries, such as mobile phones, portable devices, notebook computers, electromobiles, electric toys, electric tools, electric vehicles, ships and spacecrafts. For example, the spacecrafts include airplanes, rockets, space shuttles, spaceships, and the like.

It should be understood that the technical solutions described in the embodiments of the present application are not only applicable to the devices described above, but also applicable to all devices using batteries. However, for brief description, the following embodiments are all described by an example of an electric vehicle.

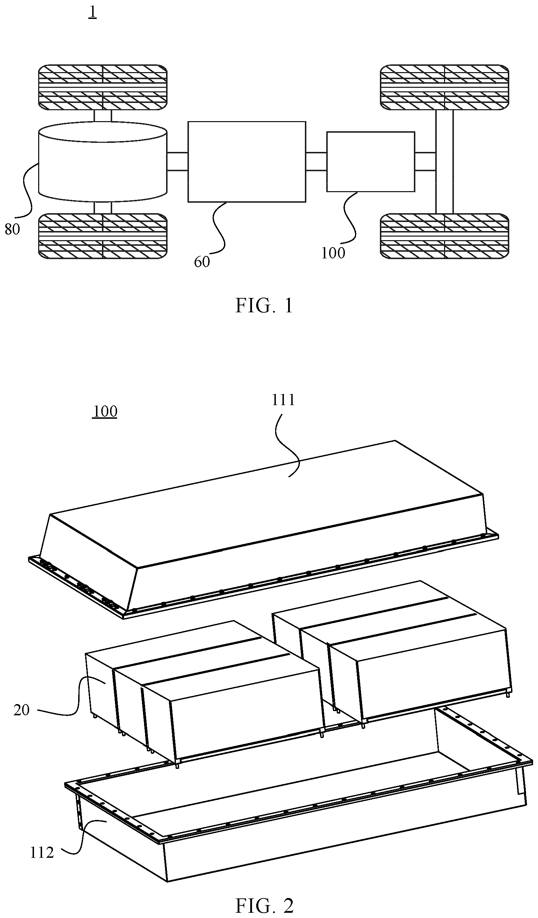

For example, as shown in FIG. 1, FIG. 1 is a schematic structural diagram of a vehicle 1 according to an embodiment of the present application. The vehicle 1 may be a fuel-powered vehicle, a gas-powered vehicle or a new-energy vehicle. The new-energy vehicle may be a battery electric vehicle, a hybrid vehicle or an extended-range vehicle, or the like. A motor 80, a controller 60 and a battery 100 may be disposed in an interior of the vehicle 1, and the controller 60 is configured to control the battery 100 to supply power to the motor 80. For example, the battery 100 may be disposed at the bottom, head or tail of the vehicle 1. The battery 100 may be configured to supply power to the vehicle 1. For example, the battery 100 may be used as an operation power source of the vehicle 1 for a circuit system of the vehicle 1, for example, for a working power demand of the vehicle 1 during startup, navigation and running. In another embodiment of the present application, the battery 100 may be used not only as an operation power source of the vehicle 1, but also as a driving power source of the vehicle 1, replacing or partially replacing fuel or natural gas to provide driving power for the vehicle 1.

In order to meet different power requirements, the battery may include a plurality of battery cells, where the plurality of battery cells may be in series connection, parallel connection or series-parallel connection. The series-parallel connection refers to a combination of series connection and parallel connection. The battery may also be referred to as a battery pack. Optionally, the plurality of battery cells may be first connected in series, in parallel or in series and parallel to constitute a battery module, and then a plurality of battery modules are connected in series, in parallel or in series and parallel to constitute a battery. That is, the plurality of battery cells may directly constitute a battery, or may first constitute a battery module, and then battery modules constitute a battery.

For example, as shown in FIG. 2, FIG. 2 is a schematic structural diagram of a battery 100 according to an embodiment of the present application. The battery 100 may include a plurality of battery cells 20. The battery 100 may further include a box (which is also referred to as a covering), an interior of the box is a hollow structure, and the plurality of battery cells 20 are accommodated in the box. As shown in FIG. 2, the box body may include two portions, which are referred to as a first portion 111 and a second portion 112, respectively, and the first portion 111 and the second portion 112 are fastened together. Shapes of the first portion 111 and the second portion 112 may be determined according to a shape of a plurality of combined battery cells 20, and the first portion 111 and the second portion 112 may each have an opening. For example, the first portion 111 and the second portion 112 each may be a hollow cuboid and each is provided with only one surface with an opening, and the opening of the first portion 111 is arranged opposite to the opening of the second portion 112. The first portion 111 and the second portion 112 are fastened to each other to form a box with a closed chamber. The plurality of battery cells 20 are combined in parallel connection or series connection or series-parallel connection and are then placed in the box formed after the first portion 111 and the second portion 112 are fastened.

Optionally, the battery 100 may further include another structure, which will not be repeated redundantly herein. For example, the battery 100 may further include a bus component, and the bus component is configured to implement the electrical connection between the plurality of battery cells 20, such as parallel connection, series connection or series-parallel connection. Specifically, the bus component may implement the electrical connection between the battery cells 20 by connecting electrode terminals of the battery cells 20. Furthermore, the bus component may be fixed to the electrode terminals of the battery cells 20 by means of welding. Electric energy of the plurality of battery cells 20 may be further led out through an electrically conductive mechanism passing through the box. Optionally, the electrically conductive mechanism may also belong to the bus component.

According to different power demands, the number of the battery cells 20 may be set to any value. The plurality of battery cells 20 may be connected in series, in parallel or in series and parallel to implement a larger capacity or power. Since there may be many battery cells 20 included in each battery 100, the battery cells 20 may be arranged in groups for convenience of installation, and each group of battery cells 20 constitutes a battery module. The number of battery cells 20 included in the battery module is not limited and may be set according to demands.

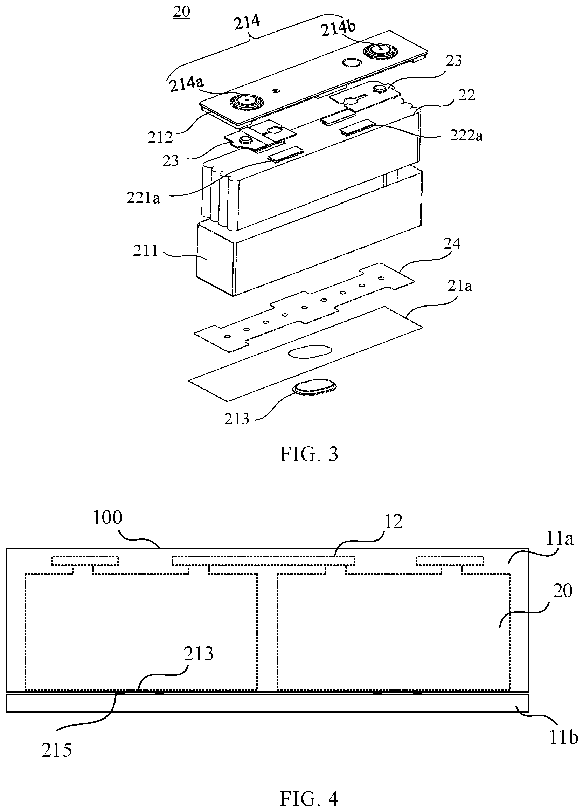

As shown in FIG. 3, FIG. 3 is a schematic structural diagram of a battery cell 20 according to an embodiment of the present application. The battery cell 20 includes one or more electrode assemblies 22, a housing 211 and a cover plate 212. A wall of the housing 211 and the cover plate 212 each are referred to as a wall of the battery cell 20. The housing 211 is shaped according to a shape of the one or more electrode assemblies 22 after combination. For example, the housing 211 may be a hollow cuboid or cube or cylinder, and one surface of the housing 211 has an opening, so that the one or more electrode assemblies 22 may be placed in the housing 211. For example, when the housing 211 is a hollow cuboid or cube, one plane of the housing 211 is a surface with an opening, that is, the plane does not have a wall, so that the inside and outside of the housing 211 are in communication with each other. When the housing 211 may be a hollow cylinder, an end face of the housing 211 is a surface with an opening, that is, the end face does not have a wall, so that the inside and outside of the housing 211 are in communication with each other. The cover plate 212 covers the opening and is connected to the housing 211 to form a closed cavity in which the electrode assemblies 22 are placed. The housing 211 is filled with an electrolyte, such as an electrolytic solution.

The battery cell 20 may further include two electrode terminals 214, and the two electrode terminals 214 may be disposed on the cover plate 212. The cover plate 212 is generally in a shape of a flat plate, and the two electrode terminals 214 are fixed on a flat plate face of the cover plate 212. The two electrode terminals 214 are a positive electrode terminal 214a and a negative electrode terminal 214b, respectively. Each electrode terminal 214 is correspondingly provided with a connecting member 23 also called a current collecting member 23, which is located between the cover plate 212 and the electrode assembly 22 and configured to electrically connect the electrode assembly 22 to the electrode terminal 214.

As shown in FIG. 3, each electrode assembly 22 has a first electrode tab 221a and a second electrode tab 222a. The first electrode tab 221a and the second electrode tab 222a have opposite polarities. For example, when the first electrode tab 221a is a positive electrode tab, the second electrode tab 222a is a negative electrode tab. The first electrode tab 221a of the one or more electrode assemblies 22 is connected to one electrode terminal through one connecting member 23, and the second electrode tab 22a of the one or more electrode assemblies 22 is connected to the other electrode terminal through the other connecting member 23. For example, the positive electrode terminal 214a is connected to the positive electrode tab through one connecting member 23, and the negative electrode terminal 214b is connected to the negative electrode tab through the other connecting member 23.

In this battery cell 20, according to actual usage demands, one or more electrode assemblies 22 may be provided. As shown in FIG. 3, four independent electrode assemblies 22 are disposed in the battery cell 20.

As an example, a pressure relief mechanism 213 may also be disposed on a wall of the battery cell 20, such as a first wall 21a shown in FIG. 3. For convenience of display, the first wall 21a is separated from the housing 211 in FIG. 3, but this does not limit that a bottom side of the housing 211 has an opening. The pressure relief mechanism 213 is configured to be actuated when the internal pressure or temperature of the battery cell 20 reaches a threshold, to relieve the internal pressure or temperature.

The pressure relief mechanism 213 may be a portion of the first wall 21a, or may be a separate structure from the first wall 21a, and is fixed to the first wall 21a by means of welding, for example. When the pressure relief mechanism 213 is a portion of the first wall 21a, for example, the pressure relief mechanism 213 may be formed by providing an indentation on the first wall 21a, a thickness of the first wall 21a corresponding to the indentation is smaller than that of another region of the pressure relief mechanism 213 other than the indentation. The indentation is the weakest position of the pressure relief mechanism 213. When excessive gas generated by the battery cell 20 causes an internal pressure of the housing 211 to rise and reach a threshold, or heat generated by an internal reaction of the battery cell 20 causes an internal temperature of the battery cell 20 to rise and reach a threshold, the pressure relief mechanism 213 may be fractured at the indentation, resulting in the communication between the inside and outside of the housing 211. The gas pressure and temperature are released outward through the cracking of the pressure relief mechanism 213, thereby avoiding explosion of the battery cell 20.

Optionally, in an embodiment of the present application, as shown in FIG. 3, in a case where the pressure relief mechanism 213 is disposed on the first wall 21a of the battery cell 20, other walls of the battery cell 20 are provided with electrode terminals 214, and other walls are different from the first wall 21a.

Optionally, a wall provided with the electrode terminal 214 is disposed opposite to the first wall 21a. For example, the first wall 21a may be a bottom wall of the battery cell 20, and the wall provided with the electrode terminal 214 may be a top wall of the battery cell 20, that is, the cover plate 212.

Optionally, as shown in FIG. 3, the battery cell 20 may further include a backing plate 24. The backing plate 24 is located between the electrode assembly 22 and a bottom wall of the housing 211, may play a role of supporting the electrode assembly 22, and may also effectively prevent the electrode assembly 22 from interfering with rounded corners of a periphery of the bottom wall of the housing 211. In addition, one or more through holes may be disposed on the backing plate 24. For example, a plurality of through holes evenly arranged may be provided, or when the pressure relief mechanism 213 is disposed on the bottom wall of the housing 211, a through hole is disposed at a position corresponding to the pressure relief mechanism 213, so as to facilitate the guiding of a liquid and gas. Specifically, this may communicate spaces of an upper surface and a lower surface of the backing plate 24, and gas generated inside the battery cell 20 and the electrolytic solution can freely pass through the backing plate 24.

The pressure relief mechanism 213 and the electrode terminals 214 are disposed on different walls of the battery cell 20, so that when the pressure relief mechanism 213 is actuated, emissions from the battery cell 20 may be farther away from the electrode terminals 214, thereby reducing the impact of the emissions on the electrode terminals 214 and the bus component, and therefore safety of the battery could be enhanced.

Further, when the electrode terminals 214 are disposed on the cover plate 212 of the battery cell 20, the pressure relief mechanism 213 is disposed on a bottom wall of the battery cell 20, so that when the pressure relief mechanism 213 is actuated, the emissions from the battery cell 20 may be are discharged to a bottom of the battery 100. In this way, the risk resulting from the emissions may be reduced by using the thermal management component at the bottom of the battery 100, and the harm to users may be reduced because the bottom of the battery 100 is usually far away from the user.

The pressure relief mechanism 213 may be in various possible pressure relief structures, which is not limited in the embodiments of the present application. For example, the pressure relief mechanism 213 may be a temperature-sensitive pressure relief mechanism configured to be capable of being melted when the internal temperature of the battery cell 20 provided with the pressure relief mechanism 213 reaches a threshold; and/or the pressure relief mechanism 213 may be a pressure-sensitive pressure relief mechanism configured to be capable of being fractured when an internal gas pressure of the battery cell 20 provided with the pressure relief mechanism 213 reaches a threshold.

FIG. 4 is a schematic diagram of a battery 100 according to an embodiment of the present application. As shown in FIG. 4, the battery 100 includes a plurality of battery cells 20, and at least one battery cell 20 of the plurality of battery cells 20 is provided with a pressure relief mechanism 213. The pressure relief mechanism 213 is configured to be actuated when an internal pressure or temperature of the battery cell 20 provided with the pressure relief mechanism 213 reaches a threshold, to relieve the internal pressure. In one embodiment, each battery cell 20 of the plurality of battery cells 20 is provided with a pressure relief mechanism 213. In another embodiment, each battery cell 20 of a part of the plurality of battery cells 20 is provided with a pressure relief mechanism 213, while each battery cell 20 of the other part of the plurality of battery cells 20 is not provided with a pressure relief mechanism 213.

The battery 100 further includes a bus component 12 configured to be electrically connected to the battery cell 20, and in other words, the bus component 12 is configured to implement electrical connection between the plurality of battery cells 20. Optionally, the bus component 12 may implement the electrical connection between the battery cells 20 by connecting electrode terminals 214 of the battery cells 20.

The battery 100 further includes an electrical cavity 11a and a collecting cavity 11b, the electrical cavity 11a is configured to accommodate the plurality of battery cells 20 and the bus component 12, the electrical cavity 11a provides an accommodating space for the battery cells 20 and the bus component 12, and a shape of the electrical cavity 11a may be determined according to the plurality of battery cells 20 and the bus component 12. The collecting cavity 11b is configured to collect emissions from the battery cell 20 when the pressure relief mechanism 213 is actuated.

In an embodiment of the present application, the electrical cavity 11a is a closed cavity, while the collecting cavity 11b is a semi-closed cavity with an opening communicating with the outside, and a wall of the electrical cavity 11a covers the opening to form a cavity, namely, a collecting cavity 11b. In other words, the wall of the electrical cavity 11a that is configured to cover the opening of the collecting cavity 11b is a wall shared by the electrical cavity 11a and the collecting cavity 11b, and the shared wall enables the electrical cavity 11a and the collecting cavity 11b to be disposed separately. In another embodiment of the present application, the collecting cavity 11b is a closed cavity, while the electrical cavity 11a is a semi-closed cavity with an opening communicating with the outside, and a wall of the collecting cavity 11b covers the opening to form a cavity, namely, the electrical cavity 11a. In other words, the wall of the collecting cavity 11b that is configured to cover the opening of the electrical cavity 11a is a wall shared by the electrical cavity 11a and the collecting cavity 11b, and the shared wall enables the electrical cavity 1 1a and the collecting cavity 11b to be disposed separately. In another embodiment of the present application, the electrical cavity 11a is a closed cavity, the collecting cavity 11b is also a closed cavity, one wall of the electrical cavity 11a and one wall of the collecting cavity 11b may be attached together to form two adjacent independent cavities, and the two walls attached together may act as a wall shared by the electrical cavity 11a and the collecting cavity 11b, and the shared wall enables the electrical cavity 11a and the collecting cavity 11b to be disposed separately.

Optionally, in an embodiment of the present application, the battery 100 may further include an isolating component 13, and the isolating component 13 has a wall shared by the electrical cavity 11a and the collecting cavity 11b. The isolating component 13 may be both a wall of the electrical cavity 11a and a wall of the collecting cavity 11b. In other words, the isolating component 13 (or a part thereof) may directly serve as a wall shared by the electrical cavity 11a and the collecting cavity 11b, so that the emissions from the battery cell 20 may enter the collecting cavity 11b through the isolating component 13.

Due to the presence of the shared wall of the electrical cavity 11a and the collecting cavity 11b in the foregoing various embodiments, the emissions may be isolated as much as possible, thereby reducing the risk resulting from the emissions and enhancing the safety of the battery.

Further, the battery 100 further includes a sealing structure 215 disposed in an airflow path formed between the pressure relief mechanism 213 and a wall of the electrical cavity 11a and configured to prevent emissions from reaching the bus component 12 when the pressure relief mechanism 213 is actuated.

Although there is a shared wall between the electrical cavity 11a and the collecting cavity 11b so as to isolate the two, in practical applications, a small amount of emissions may still enter the electrical cavity 11a. In an embodiment of the present application, a sealing structure 215 is provided in an airflow path formed between the pressure relief mechanism 213 and a wall of the electrical cavity 11a, and in this way, when the pressure relief mechanism 213 is actuated, emissions from the battery cell 20 can be blocked from entering the electrical cavity 11a, thereby reducing a risk of insulation protection failure and the possibility of occurrence of high-voltage ignition, and thus safety of a battery is improved. In addition, the presence of this sealing structure 215 may prevent high-temperature particles from accumulating in a high-risk region, which reduces the possibility of occurrence of a failure mode caused by a local temperature rise.

It should be noted that the airflow path formed between the pressure relief mechanism 213 and the wall of the electrical cavity 11a includes not only an airflow path in the electrical cavity 11a that is parallel to a plane where the pressure relief mechanism 213 is located, but also an airflow path in the electrical cavity 11a that is perpendicular to a plane where the pressure relief mechanism 213 is located.

It can be understood that FIG. 4 is only an example, showing a schematic cross-sectional view of an implementation manner of the sealing structure 215, which should not limit the protection scope of the present application. In addition to the embodiment shown in FIG. 4, the sealing structure 215 provided in the embodiment of the present application may also be in other forms, and/or the position where the sealing structure 215 is disposed is intended to prevent the emissions when the pressure relief mechanism 213 is actuated from reaching the bus component 12, and the form and position of the sealing structure 215 are not specifically limited in this embodiment of the present application.

Optionally, as shown in FIG. 4, the sealing structure 215 is disposed at least around a periphery of the pressure relief mechanism 213, to prevent the emissions from reaching the bus component 12 when the pressure relief mechanism 213 is actuated.

A specific embodiment in which the sealing structure 215 is disposed around a periphery of the pressure relief mechanism 213 will be described in detail below. For the convenience of description, the battery cell 20 referred to in this embodiment refers to a battery cell 20 provided with a pressure relief mechanism 213. For example, the battery cell 20 may be the battery cell 20 in FIG. 3.

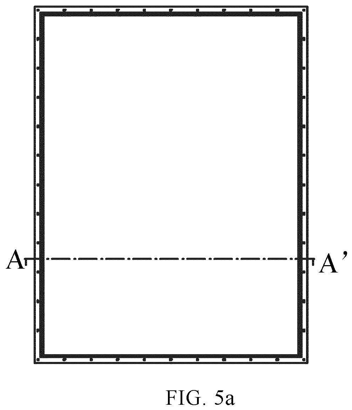

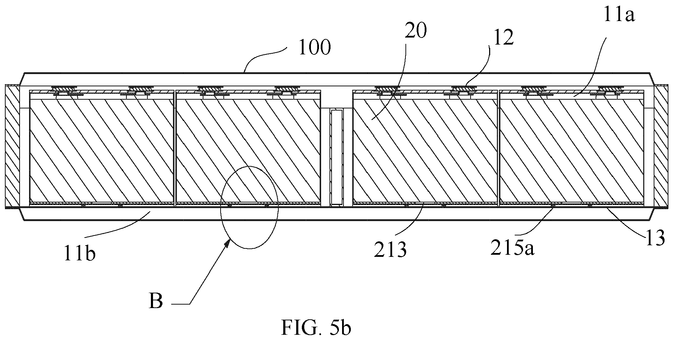

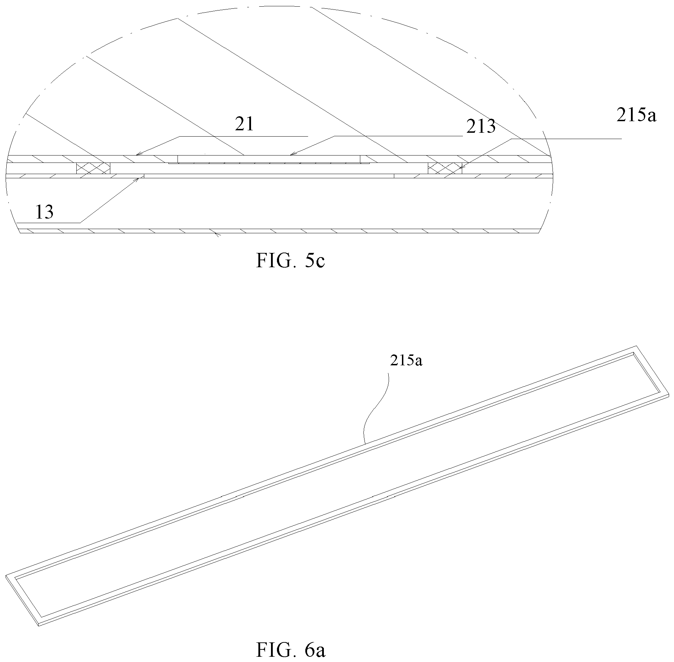

FIG. 5a is a schematic plan diagram of a battery 100 according to an embodiment of the present application. FIG. 5b is a cross-sectional view of the battery 100 in a direction of A-A' according to an embodiment of the present application, and FIG. 5c is a partially detailed view corresponding to B in FIG. 5b.

As shown in FIGS. 5a to 5c, a sealing structure 215 of the embodiment of the present application includes a first sealing component 215a disposed around a periphery of a pressure relief mechanism 213. Specifically, the pressure relief mechanism 213 is disposed on a first wall 21 of the battery cell 20, and the first sealing component 215a is disposed between the first wall 21 and an isolating component 13. In other words, the first sealing component 215a is disposed between a wall of the battery cell 20 provided with the pressure relief structure 213 and the isolating component 13. The first sealing component 215a has a through hole at a position corresponding to the pressure relief mechanism 213, and when the pressure relief mechanism 213 is actuated, the emissions pass through the through hole and the isolating component 13 and enter the collecting cavity 11b.

The periphery of the pressure relief mechanism213 is provided with the first sealing component 215a, and the first sealing component 215a has a through hole at a position corresponding to the pressure relief mechanism 213, so that when the pressure relief mechanism 213 is actuated, the emissions cannot diffuse laterally into the electrical cavity 11a, but can only diffuse longitudinally into the collecting cavity 11b, and thus the emissions may be isolated from the bus component 12, and the safety performance of the battery is enhanced.

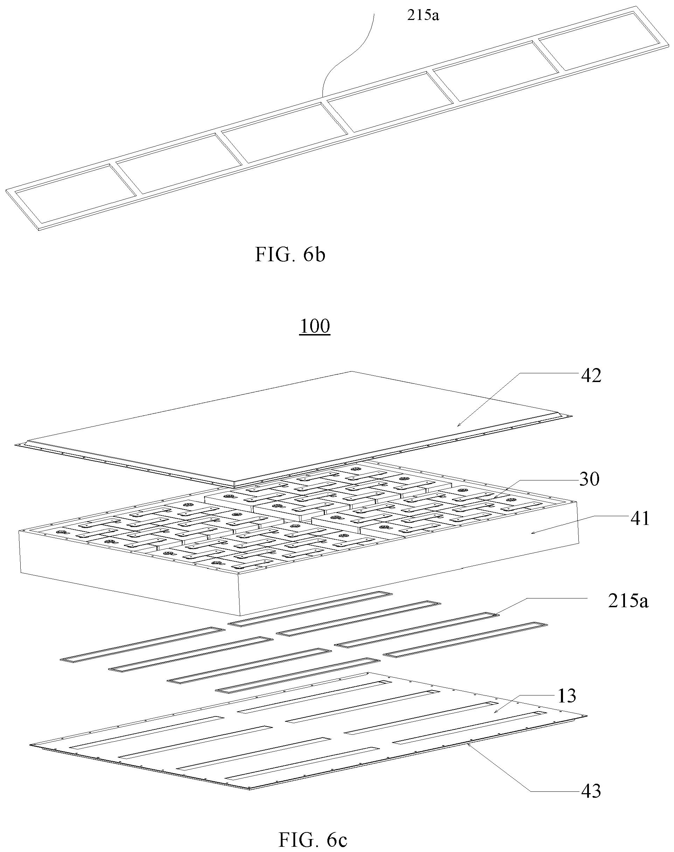

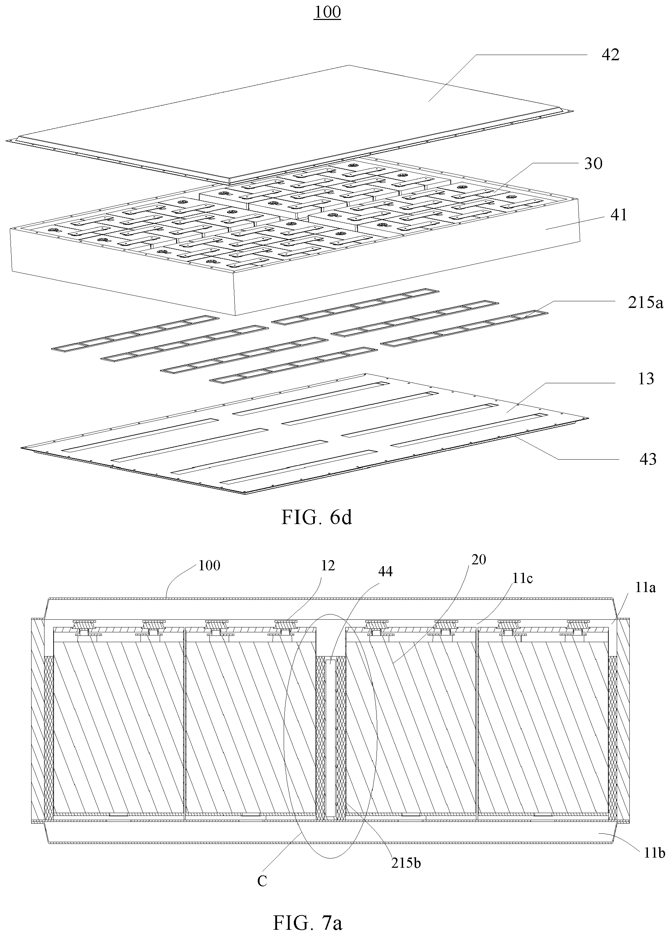

FIG. 6a shows a schematic structural diagram of a first sealing component 215a. FIG. 6b shows a schematic structural diagram of another first sealing component 215a. FIG. 6c is an exploded view of a battery 100 including the first sealing component 215a in FIG. 6a. FIG. 6d is an exploded view of a battery 100 including the first sealing component 215a in FIG. 6b.

As shown in FIG. 6a, a first sealing component 215a may be of a frame-shaped structure with one through hole, that is, one through hole corresponds to pressure relief mechanisms 213 of a plurality of battery cells 20.

As shown in FIG. 6b, a first sealing component 215a may be of a grid structure with a plurality of through holes, the plurality of through holes are in one-to-one correspondence with pressure relief mechanisms 213 of a plurality of battery cells 20, that is, each through hole of the plurality of through holes corresponds to a pressure relief mechanism 213 of one battery cell 20.

Specifically, as shown in FIGS. 6c and 6d, the battery 100 includes a plurality of battery cells 20, and the plurality of battery cells 20 may be divided into at least one battery module 30, or may be referred to as a battery group or a battery pack. The battery 100 further includes a bus component 12, and the bus component is configured to implement electrical connection between the plurality of battery cells 20, such as parallel connection, series connection or series-parallel connection. The bus component 12 may implement the electrical connection between the battery cells 20 by connecting electrode terminals 214 of the battery cells 20. The battery 100 generally further includes a box configured to package the plurality of battery cells 20, and the box may include an enclosing wall 41 formed by enclosing two end plates and two side plates end-to-end, a box upper cover 42 and a box lower cover 43, where the box upper cover 42 and the box lower cover 43 respectively cover openings at both sides of the annular wall 41 to form a cavity. The battery 100 further includes an isolating component 13, and the isolating component 13 may divide the cavity formed by the box 40 into an electrical cavity 11a and a collecting cavity 11b, where the electrical cavity 11a is configured to accommodate the plurality of battery cells 20 and the bus component 12, and the collecting cavity 11b is configured to collect emissions from the battery cell 20 when the pressure relief mechanism 213 is actuated.

As shown in FIG. 6c, a plurality of battery cells 20 are disposed in a stacked manner. The first sealing component 215a is of a frame-shaped structure with one through hole, that is, one through hole corresponds to pressure relief mechanisms 213 of the plurality of battery cells 20 stacked in the same direction. In other words, the pressure relief mechanisms of the plurality of battery cells 20 stacked in the same direction may be taken as an integral portion, and the first sealing component 215a is disposed around a periphery of the integral portion. Optionally, one through hole of the first sealing component 215a may also correspond to pressure relief mechanisms 213 of an array of the battery cells stacked in two directions, that is, the pressure relief mechanisms 213 of the array of the battery cells may be taken as an integral portion, and the first sealing component 215a is disposed around a periphery of the integral portion.

It should be noted that, in the integral portion surrounded by the first sealing component 215a in FIG. 6c, a part of the battery cells 20 may be provided with the pressure relief mechanism 213, while the other part of the battery cells 20 may not be provided with the pressure relief mechanism.

The frame-shaped structure with one through hole is adopted as a sealing structure, and the processing difficulty is low.

As shown in FIG. 6d, a plurality of battery cells 20 are disposed in a stacked manner. The first sealing component 215a is a grid structure including a plurality of through holes, the plurality of through holes may be in one-to-one correspondence with pressure relief mechanisms 213 of the plurality of battery cells 20 stacked in the same direction. In other words, the first sealing component 215a is disposed around a periphery of a pressure relief mechanism 213 of each of the plurality of battery cells 20 stacked in the same direction. Optionally, the plurality of through holes of the first sealing component 215a may also be in one-to-one correspondence with pressure relief mechanisms 213 of an array of the battery cells stacked in two directions, that is, the first sealing component 215a is disposed around a periphery of the pressure relief mechanism 213 of each battery cell 20 in the array of the battery cells.

The grid structure with a plurality of through holes is adopted as a sealing structure, and a sealing effect can be improved.

Optionally, in an embodiment of the present application, since a part of the battery cells 20 in the battery 100 is provided with the pressure relief mechanism 213, and the other part of the battery cells 20 is not provided with the pressure relief mechanism 213, a first sealing component 215a may be disposed at a periphery of each pressure relief mechanism 213, that is, the first sealing component 215a is of a square-shaped structure with one through hole, and one through hole corresponds to one pressure relief mechanism 213, which can not only improve the sealing effect, but also reduce the processing difficulty.

Optionally, in an embodiment of the present application, the battery 100 may include at least two of the first sealing component 215a of the frame-shaped structure, the first sealing component 215a of the grid structure, and the first sealing component 215a of the square-shaped structure.

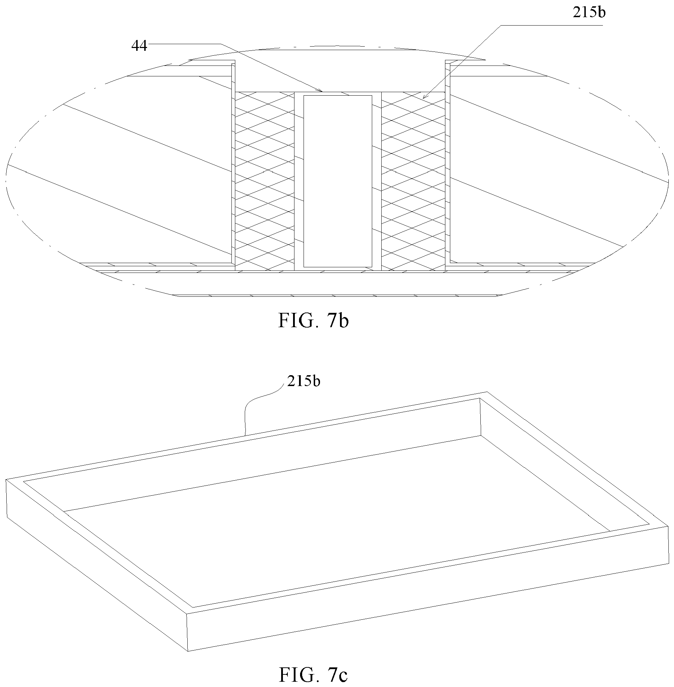

FIG. 7a is another cross-sectional view of the battery 100 shown in FIG. 5a in a direction of A-A', and FIG. 7b is a partially detailed view corresponding to C in FIG. 7a.

As shown in FIGS. 7a and 7b, the battery 100 further includes a partition beam 44, the partition beam 44 is configured to partition an electrical cavity 11a into a plurality of accommodating cavities 11c, and the sealing structure 215 includes a second sealing component 215b disposed between a side wall of the accommodating cavity 11c and a second wall of the battery cell 20, and the second wall is disposed to intersect with the first wall in the foregoing embodiment. The battery cell 20 is the outermost battery cell 20 in the accommodating cavity 11c. The battery cell 20 may be provided with a pressure relief mechanism 213 or may not be provided with a pressure relief mechanism 213.

Optionally, in an embodiment of the present application, the second sealing component 215b may cover the entire second wall of the battery cell 20 as shown in FIGS. 7a and 7b, or may cover a part of the second wall of the battery cell 20, and a height of the second sealing component 215b is not limited in the embodiment of the present application.

A second sealing component 215b is disposed between a side wall of the accommodating cavity 11c and a second wall of the battery cell 20, so that when the pressure relief mechanism 213 is actuated, the emissions cannot diffuse longitudinally into the electrical cavity 11a but can only diffuse longitudinally into the collecting cavity 11b, and thus the emissions may be isolated from the bus component 12 and the safety of the battery cell is enhanced.

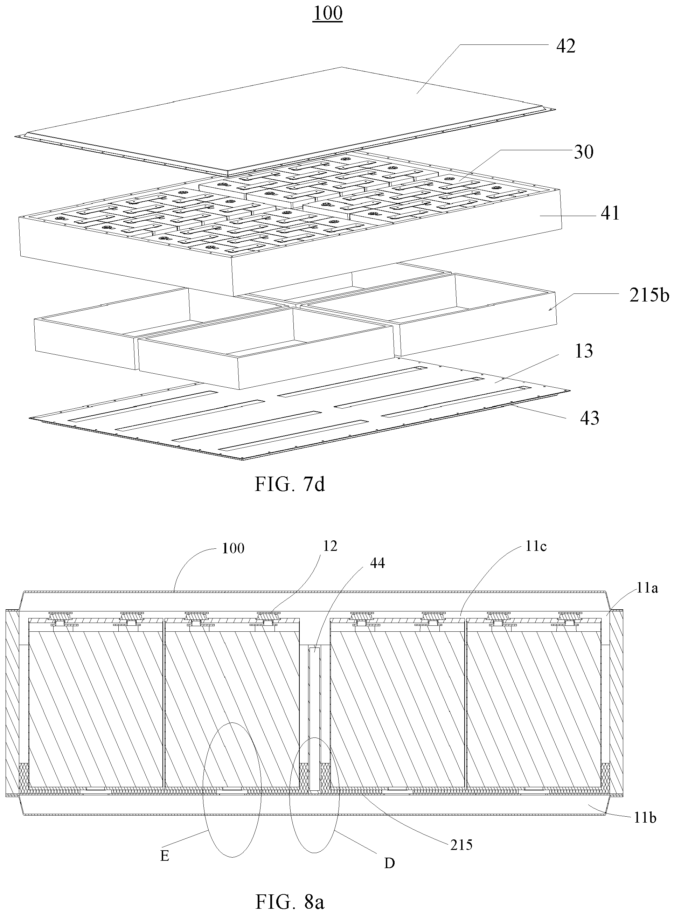

FIG. 7c shows a schematic block diagram of a second sealing component 215b provided in an embodiment of the present application. FIG. 7d shows an exploded view of a battery 100 including a second sealing component 215b. As shown in FIGS. 7c and 7d, the second sealing component 215b is of a frame-shaped structure, and is disposed around a second wall of the outermost battery cell 20 in an accommodating cavity 11c and configured to seal a gap between the second wall of the outermost battery cell 20 and a side wall of the accommodating cavity 11c, so as to prevent emissions from reaching the bus component 12 when the pressure relief mechanism 213 in the accommodating cavity 11c is actuated.

Optionally, in an embodiment of the present application, the battery 100 may include the first sealing component 215a and the second sealing component 215b, that is, the first sealing component 215a may be disposed between the first wall of the battery cell 20 provided with the pressure relief mechanism 213 and the isolating component 13, and the first sealing component 215a may have a through hole at the position corresponding to the pressure relief mechanism 213, and when the pressure relief mechanism 213 is actuated, the emissions pass through the through hole and the isolating component 12 and enter the collecting cavity 11b. In addition, the second sealing component 215b may be disposed between the side wall of the accommodating cavity 11c and the second wall of the outermost battery cell 20 in the accommodating cavity 11c, and configured to seal a gap between the side wall of the accommodating cavity 11c and the second wall of the outermost battery cell 20, thereby preventing the emissions from reaching the bus component 12 when the pressure relief mechanism 213 in the interior the accommodating cavity 11c is actuated. The first wall and the second wall of the battery cell 20 are disposed to intersect.

The first sealing component 215a and the second sealing component 215b are provided, and the airflow path formed between the pressure relief mechanism 213 and the bus component 12 may be sealed in all directions, so as to better prevent the emissions from reaching the bus component 12 when the pressure relief mechanism 213 is actuated.

Optionally, in an embodiment of the present application, the first sealing component 215a may be a sealing gasket or a sealant. The second sealing component 215b may also be a sealing gasket or a sealant.

Optionally, in an embodiment of the present application, the first sealing component 215a may be a compressible sealing material such as, silicone rubber or aerogel felt, which is commonly used. The second sealing component 215b may also be a compressible sealing material such as, silicone rubber or aerogel felt, which is commonly used.

In one possible implementation manner, if the first sealing component 215a or the second sealing component 215b adopts a sealing gasket, a surface thereof may be coated or sprayed with a material having a melting point greater than the temperature of the emissions, thereby achieving requirements of temperature resistance and impact resistance.

In another possible implementation manner, the melting point of the first sealing component 215a and/or the second sealing component 215b is greater than the temperature of the emissions, which can also meet the requirements for temperature resistance and impact resistance.

Optionally, in an embodiment of the present application, if the second sealing component 215b adopts the sealant, the sidewall of the accommodating cavity 11c is provided with a sealant injecting hole configured to inject the sealant. Since the sealant has a certain fluidity during use and is gradually solidified after a period of time, the sealant may be arranged more conveniently by injecting the sealant through the sealant injecting hole, thereby forming the second sealing component 215b after solidification.

Optionally, in an embodiment of the present application, the battery 100 includes both the first sealing component 215a and the second sealing component 215b, and the first sealing component 215a may be a sealing gasket and the second sealing component 215b may be a sealant, and the sealant and the sealing gasket are used at the same time to ensure that the battery 100 has a more excellent sealing effect.

Optionally, in an embodiment of the present application, the battery 100 includes both the first sealing component 215a and the second sealing component 215b, and the first sealing component 215a and the second sealing component 215b may be an integrally formed sealing structure 215. Specifically, the sealing structure 215 adopts a structure in which a bottom portion thereof is completely wrapped with a sealing gasket.

A specific embodiment in which the sealing structure 215 adopts a structure in which a bottom portion thereof is completely wrapped with a sealing gasket. will be described in detail below.

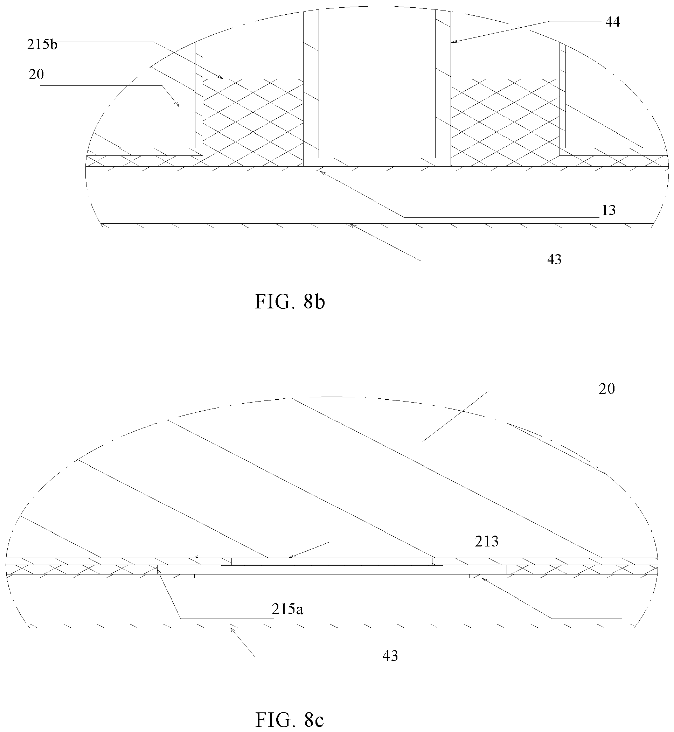

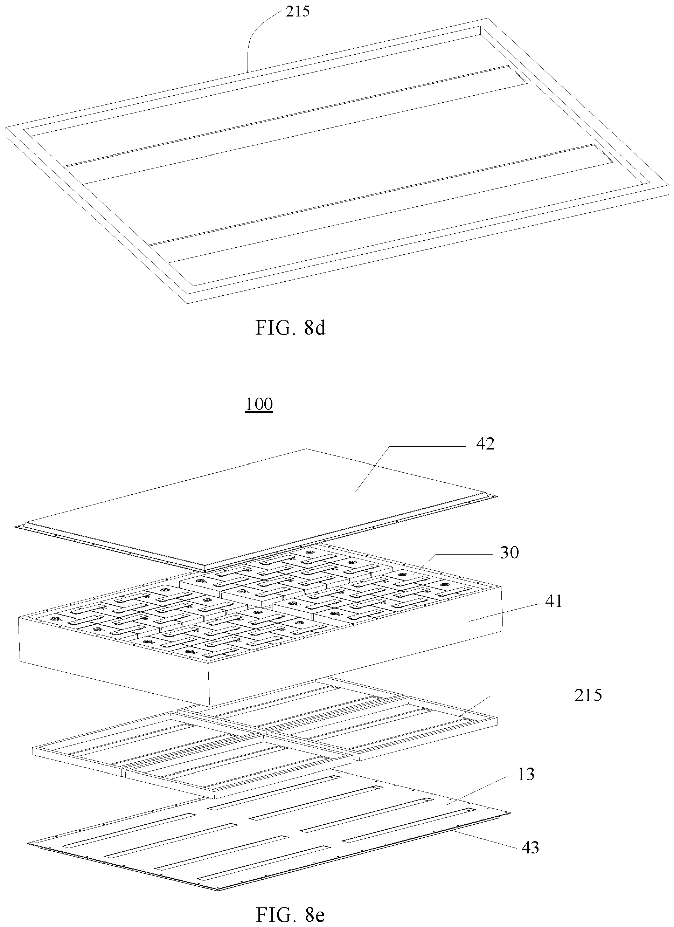

FIG. 8a is another cross-sectional view of the battery 100 shown in FIG. 5a in a direction of A-A', and FIG. 8b is a partially detailed view corresponding to D in FIG. 8a. FIG. 8c is a partially detailed view corresponding to E in FIG. 8a. FIG. 8d is a structural diagram of a sealing structure 215 with a bottom portion completely wrapped disclosed in an embodiment of the present application. FIG. 8e is an exploded view of a battery 100 including the sealing structure 215 with the bottom portion completely wrapped shown in FIG. 8d.

As shown in FIGS. 8a to 8e, a sealing structure 215 is a structure with a bottom portion completely wrapped. As shown in FIGS. 8a to 8e, the sealing structure 215 includes a first sealing component 215a disposed between a first wall of a battery cell 20 and an isolating component 13, and a second sealing component 215b disposed between a second wall of the outermost battery cell 20 in an accommodating cavity 11c and a side wall of the accommodating cavity 11c, where the first sealing component 215 wraps all positions of the first wall of the battery cell 20 except a position where the pressure relief mechanism 213 is located, that is, the first sealing component 215 has a through hole at a position corresponding to the pressure relief mechanism 213 of the battery cell 20, that is, it is disposed around a periphery of the pressure relief mechanism 213 of the battery cell 20. The first sealing component 215a and the second sealing component 215b are connected at a position where the first wall and the second wall of the battery cell 20 intersect.

The sealing effect can be improved by using the sealing structure 215 with the bottom portion completely wrapped.

It should be understood that the foregoing description only exemplifies setting positions, shapes, and adopted materials of several sealing structures 215, and in practical application, a suitable position, shape, and material may be selected according to the actual situation, which is not limited in the present application.

An embodiment of the present application further provides a power consumption apparatus, the power consumption apparatus may include the battery 100 in the foregoing embodiments, and the battery 100 is configured to provide electric power.

Optionally, the power consumption apparatus may be a vehicle 1, a ship or a spacecraft.

The battery and the power consumption apparatus of the embodiment of the present application are described above, and a method and apparatus for producing a battery of an embodiment of the present application will be described below. For the parts that are not described in detail, reference is made to the foregoing embodiments.

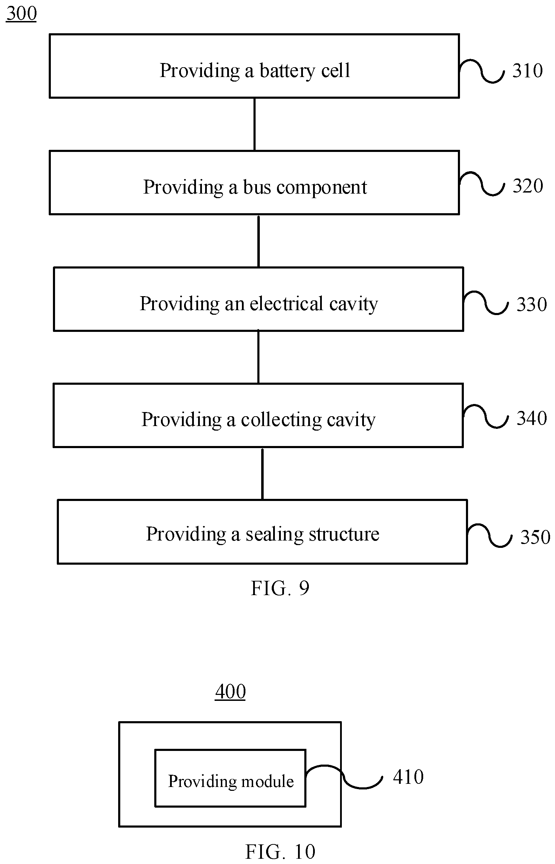

FIG. 9 shows a schematic flowchart of a method 300 for producing a battery according to an embodiment of the present application. The battery may be the battery 100 provided in the foregoing various embodiments. As shown in FIG. 9, the method 300 may include the following steps.

S310, a battery cell 20 is provided.

In one embodiment, there may be a plurality of battery cells 20, and at least one battery cell 20 of the plurality of battery cells 20 is provided with a pressure relief mechanism 213, and the pressure relief mechanism 213 is configured to be actuated when an internal pressure or temperature of the battery cell 20 provided with the pressure relief mechanism 213 reaches a threshold, to relieve the internal pressure.

In S320, a bus component 12 is provided.

In one embodiment, the bus component 12 is configured to implement electrical connection between the plurality of battery cells 20 such as, parallel connection, series connection or series-parallel connection. The bus component may implement the electrical connection between the battery cells by connecting electrode terminals of the battery cells. In some embodiments, the bus component may be fixed to the electrode terminals of the battery cells by means of welding.

S330, an electrical cavity 11a is provided.

In one embodiment, the electrical cavity 11a is configured to accommodate the plurality of battery cells 20 and the bus component 12. In other words, the electrical cavity 11a provides an installing space for the battery cells 20 and the bus component 12.

S340, a collecting cavity 11b is provided.

In one embodiment, the collecting cavity 11b is configured to collect emissions from the battery cell 20 when the pressure relief mechanism 213 is actuated.

S350, a sealing structure 215 is provided.

In one embodiment, the sealing structure 215 is disposed in an airflow path formed between the pressure relief mechanism 213 and a wall of the electrical cavity 11a and configured to prevent the emissions from reaching the bus component 12 when the pressure relief mechanism 213 is actuated.

Optionally, in an embodiment of the present application, an isolating component 13 may also be provided and is configured to isolate the electrical cavity 11a from the collecting cavity 11b, the electrical cavity 11a and the collecting cavity 11b are disposed on both sides of the isolating component 13, and the isolating component 13 is structured as a wall shared by the electrical cavity 11a and the collecting cavity 11b.

Optionally, in an embodiment of the present application, the sealing structure 215 includes a first sealing component 215a disposed between the first wall of the battery cell 20 and the isolating component 13, the first sealing component 215a has a through hole, and when the pressure relief mechanism 213 is actuated, the emissions pass through the isolating component 13 via the through hole and enter the collecting cavity 11b.

Optionally, in an embodiment of the present application, the battery 100 further includes a partition beam 44 configured to partition the electrical cavity 11a into a plurality of accommodating cavities 11c, the sealing structure 215 includes a second sealing component 215b disposed between a side wall of the accommodating cavity 11c and a second wall of the battery cell 20, and the first wall and the second wall of the battery cell 20 are disposed to intersect.

Optionally, in an embodiment of the present application, the second sealing component 215b is a sealant, and providing the sealing structure 215 specifically includes: injecting the sealant into a sealant injecting hole on the side wall of the accommodating cavity 11c, and forming the second sealing component 215b after the sealant is solidified.

FIG. 10 shows a schematic block diagram of an apparatus 400 for producing a battery according to an embodiment of the present application. The battery may be the battery 100 provided in the foregoing various embodiments. As shown in FIG. 10, an apparatus 400 for producing a battery may include: a providing module 410.

The providing module 410 is further configured to: provide a battery cell 20, the battery cell 20 being provided with a pressure relief mechanism 213, the pressure relief mechanism 213 being configured to be actuated when an internal pressure or temperature of the battery cell 20 reaches a threshold, to relieve the internal pressure.

The providing module 410 is further configured to: provide a bus component 12 configured to be electrically connected to the battery cell 20.

The providing module 410 is further configured to: provide an electrical cavity 11a configured to accommodate the battery cell 20 and the bus component 12.

The providing module 410 is further configured to: provide a collecting cavity 11b configured to collect emissions from the battery cell 20 when the pressure relief mechanism 213 is actuated.

The providing module 410 is further configured to: provide a sealing structure 215 disposed in an airflow path formed between the pressure relief mechanism 213 and a wall of the electrical cavity 11a and configured to prevent the emissions from reaching the bus component 12 when the pressure relief mechanism 213 is actuated.

Although the present application has been described with reference to the preferred embodiments thereof, various improvements may be made to the present application and the components therein may be replaced with equivalents without departing from the scope of the present application. In particular, the technical features mentioned in each embodiments may be combined in any manner, as long as there is no structural conflict. The present application is not limited to the specific embodiments disclosed herein, but includes all technical solutions falling within the scope of the claims.

## Claims

1. A battery (100), comprising:
a battery cell (20), provided with a pressure relief mechanism (213), the pressure relief mechanism (213) being configured to be actuated when an internal pressure or temperature of the battery cell (20) reaches a threshold, to relieve the internal pressure;
a bus component (12), configured to be electrically connected to the battery cell (20);
an electrical cavity (11a), configured to accommodate the battery cell (20) and the bus component (12);
a collecting cavity (11b), configured to collect emissions from the battery cell (20) when the pressure relief mechanism (213) is actuated; and
a sealing structure (215), disposed in an airflow path formed between the pressure relief mechanism (213) and a wall of the electrical cavity (11a) and configured to prevent the emissions from reaching the bus component (12) when the pressure relief mechanism (213) is actuated.

2. The battery (100) according to claim 1, wherein the sealing structure (215) is disposed at least around an outer periphery of the pressure relief mechanism (213), to prevent the emissions from reaching the bus component (12) when the pressure relief mechanism (213) is actuated.

3. The battery (100) according to claim 1 or 2, further comprising:
an isolating component (13), configured to isolate the electrical cavity (11a) from the collecting cavity (11b), the isolating component (13) being structured as a wall shared by the electrical cavity (11a) and the collecting cavity (11b).

4. The battery (100) according to claim 3, wherein the pressure relief mechanism (213) is disposed on a first wall of the battery cell (20), the sealing structure (215) comprises a first sealing component (215a) disposed between the first wall and the isolating component (13), the first sealing component (215a) has a through hole at a position corresponding to the pressure relief mechanism (213), and when the pressure relief mechanism (213) is actuated, the emissions pass through the isolating component (13) via the through hole and enter the collecting cavity (11b).

5. The battery (100) according to claim 4, wherein the first sealing component (215a) is of a frame-shaped structure with one through hole, a plurality of battery cells (20) are provided, and one through hole corresponds to pressure relief mechanisms (213) of the plurality of battery cells.

6. The battery (100) according to claim 4, wherein the first sealing component (215a) is of a grid structure with a plurality of through holes, a plurality of battery cells (20) are provided, and the plurality of through holes are in one-to-one correspondence with pressure relief mechanisms (213) of the plurality of the battery cells.

7. The battery (100) according to any one of claims 4 to 6, wherein the battery (100) further comprises: a partition beam (44) configured to partition the electrical cavity (11a) into a plurality of accommodating cavities (11c);
the sealing structure (215) further comprises a second sealing component (215b) disposed between a side wall of an accommodating cavity (11c) and a second wall of the battery cell (20), and the second wall is disposed to intersect with the first wall.

8. The battery (100) according to claim 7, wherein the first sealing component (215a) is a sealing gasket or a sealant and/or the second sealing component (215b) is a sealing gasket or a sealant.

9. The battery (100) according to claim 8, wherein the side wall of the accommodating cavity (11c) is provided with a sealant injecting hole configured to inject the sealant.

10. The battery (100) according to claim 8, wherein a surface of the sealing gasket is coated or sprayed with a material having a melting point greater than a temperature of the emissions.

11. The battery (100) according to claim 7, wherein the first sealing component (215a) and the second sealing component (215b) are integrally formed.

12. The battery (100) according to any one of claims 1 to 11, wherein a melting point of the sealing structure (215) is greater than a temperature of the emissions.

13. A power consumption apparatus, comprising: the battery (100) according to any one of claims 1 to 12, the battery (100) being configured to provide electric energy for the power consumption apparatus.

14. A method for producing a battery (100), comprising:
providing a battery cell (20), the battery cell (20) being provided with a pressure relief mechanism (213), the pressure relief mechanism (213) being configured to be actuated when an internal pressure or temperature of the battery cell (20) reaches a threshold, to relieve the internal pressure;
providing a bus component (12) configured to be electrically connected to the battery cell (20);
providing an electrical cavity (11a) configured to accommodate the battery cell (20) and the bus component (12);
providing a collecting cavity (11b) configured to collect emissions from the battery cell (20) when the pressure relief mechanism (213) is actuated; and
providing a sealing structure (215) disposed in an airflow path formed between the pressure relief mechanism (213) and a wall of the electrical cavity (11a) and configured to prevent the emissions from reaching the bus component (12) when the pressure relief mechanism (213) is actuated.

15. An apparatus for producing a battery (100), comprising:
a providing module configured to:
provide a battery cell (20), the battery cell (20) being provided with a pressure relief mechanism (213), the pressure relief mechanism (213) being configured to be actuated when an internal pressure or temperature of the battery cell (20) reaches a threshold, to relieve the internal pressure;
provide a bus component (12) configured to be electrically connected to the battery cell (20);
provide an electrical cavity (11a) configured to accommodate the battery cell (20) and the bus component (12);
provide a collecting cavity (11b) configured to collect emissions from the battery cell (20) when the pressure relief mechanism (213) is actuated; and
provide a sealing structure (215) disposed in an airflow path formed between the pressure relief mechanism (213) and a wall of the electrical cavity (1 1a) and configured to prevent the emissions from reaching the bus component (12) when the pressure relief mechanism (213) is actuated.
